# EUROPÄISCHE PATENTSCHRIFT

(11) **EP 3 098 247 B1**
(45) Veröffentlichungstag und Bekanntmachung des Hinweises auf die Patenterteilung: **11.11.2020**
(21) Anmeldenummer: 16001003.9
(22) Anmeldetag: 04.05.2016
(51) Int. Cl.: C08G 18/48, C08G 18/75, C09D 175/04, C08G 18/78, C08G 18/79, C09D 175/12

(54) **VERFAHREN ZUR FEUCHTIGKEITSBESTÄNDIGEN GRUNDIERUNG VON MINERALISCHEN UNTERGRÜNDEN**
PROCESS FOR APPLYING A HUMIDITY-RESISTANT PRIMER ONTO A MINERAL SUBSTRATE
PROCÉDÉ POUR APPLIQUER UNE COUCHE DE FOND RESISTANTE À L'HUMIDITÉ SUR UN SUPPORT MINÉRAL

(30) Priorität: 26.05.2015 DE 102015108232
(43) Veröffentlichungstag der Anmeldung: 30.11.2016
(73) Patentinhaber: REVOPUR GmbH, 97318 Kitzingen (DE)
(72) Erfinder: Sven, Luckert, 97320 Sulzfeld (DE); Lutz, Schmalstieg, 51065 Köln (DE)
(74) Vertreter: Gleim, Christian Ragnar

(56) Entgegenhaltungen:
- WO-A1-2004/033517
- DE-A1-102005 047 562
- DATABASE WPI Week 200010 Thomson Scientific, London, GB; AN 2000-111701 XP002758617, & JP H11 349656 A (SUMITOMO RUBBER IND LTD) 21. Dezember 1999 (1999-12-21)

## Beschreibung

Die Erfindung betrifft ein Verfahren zur feuchtigkeitsbeständigen Grundierung von mineralischen Untergründen, insbesondere zur Grundierung unter Asphaltbelägen auf Beton, durch Applikation einer Flüssigabdichtung auf Basis von aminfunktionellen Asparaginsäureestern und speziellen isocyanatfunktionellen Polyether-Polymeren.

Die Abdichtung von Bauwerken ist von zentraler Bedeutung für die Dauerhaftigkeit von Gebäuden. Hierbei hat sich die Abdichtung mit bituminösen Materialien, Gussasphalt oder Flüssigkunststoffen als allgemein anerkannter Stand der Technik etabliert.

Vor dem Aufbringen der eigentlichen Abdichtung auf Basis der o.g. Materialien müssen mineralische Untergründe, wie beispielsweise Mauerwerk oder Beton grundsätzlich Poren- verschließend grundiert werden.

Technisch besonders anspruchsvoll ist die Grundierung unter Asphaltbelägen im Brückenbau. Geeignete Grundierungen müssen der Technische Prüfvorschrift für Reaktionsharze für Grundierungen, Versiegelungen und Kratzspachtelungen unter Asphaltbelägen auf Beton (TP-BEL-EP) und den entsprechenden technische Lieferbedingungen für Reaktionsharze (TL-BEL-EP) des Bundesministers für Verkehr (BMV), Ausgabe 1999- und Fahrbahnbau, genügen.

Typischerweise werden in der genannten Anwendung 2-Komponenten-Epoxidharz-Systeme oder peroxidisch härtende Methacrylatharze eingesetzt. Diese Systeme genügen den technischen Kriterien der TP-BEL-EP bzw. der TL-BEL-EP in vollem Umfang, haben jedoch applikationstechnisch erhebliche Nachteile:
2-Komponenten-Epoxidharzsysteme benötigen eine relativ lange Reaktionszeit und härten bei Temperaturen unter 5°C nicht mehr vollständig aus. Gleichzeitig nehmen die aminischen Härter Kohlendioxid aus der Luft auf, was eine spätere Aushärtung verhindert. Deshalb können diese Systeme nur bei Temperaturen oberhalb von 5°C sicher verarbeitet werden. Somit können diese Systeme nur in der wärmeren Jahreszeit verarbeitet werden, in der kälteren Jahreszeit erfordert die Applikation eine Einhausung der zu beschichtenden Flächen mit Beheizung, was extrem teuer und zeitaufwändig ist. Peroxidisch härtende Methacrylatharze sind dagegen deutlich reaktionsfreudiger und härten auch bei Temperaturen unter 0°C schnell und sicher aus. Problematisch bei diesen Systemen ist die Empfindlichkeit gegen Restfeuchtigkeit aus oder auf dem Untergrund, wobei die Haftung auf dem mineralischen Substrat durch die Feuchtigkeit dramatisch verschlechtert wird. Deshalb können die Methacrylatharze nicht auf nassem oder feuchtem Beton und auch nicht jungem Beton appliziert werden. Bei niedrigen Temperaturen bereitet Tau aus kondensierter Luftfeuchtigkeit zusätzliche Probleme. Da Feuchtigkeit auf und/oder aus dem Untergrund bei niedrigen Temperaturen unter realen Baustellenbedingungen nicht ausgeschlossen werden kann, ist die Applikationssicherheit der Methacrylatharze nicht zufriedenstellend.

Als Grundierung für mineralische Untergründe und Beton werden neben den Epoxidharzsystemen und den Methacrylatsystemen auch Polyurea-Systeme beschrieben. Diese Systeme bestehen aus einer aromatischen und/oder aliphatischen Isocyanatkomponente sowie aus einer Polyaminkomponente auf Basis aromatischer und/oder aliphatischer primärer und/oder sekundärer Amine. Derartige Polyurea-Systeme sind hochreaktiv, härten innerhalb weniger Sekunden aus und sind breit beschrieben, beispielhaft in der US 5 162 388 oder der US 5 442 034. Derartige hochreaktive Polyurea-Systeme sind grundsätzlich auf mineralischen Substraten und insbesondere auf Beton einsetzbar, können aber nur unter Zuhilfenahme eines aufwändigen und teuren 2-Komponenten-Spritzequipments verarbeitet werden. Die anwendungstechnische Erfahrung mit diesen Produkten in der Vergangenheit hat gezeigt, dass diese Systeme aufgrund der besonders hohen Reaktivität keine Zeit für eine ausreichende Benetzung des Untergrundes haben, weswegen es kaum möglich ist, mit derartigen Systemen reproduzierbare Haftzugsfestigkeiten über die gesamte zu beschichtende Fläche zu erzielen. Somit ist auch für die hochreaktiven Polyurea-Systeme des Standes der Technik keine ausreichende Applikationssicherheit gegeben.

In der Vergangenheit hat es daher vielfältige Bemühungen gegeben, die Reaktivität solcher Systeme zu vermindern. Einen technologischen großen Fortschritt bieten Polyurea-Systeme auf Basis von Isocyanaten und Polysparaginsäureestern, wie sie durch Addition von Maleinsäure- und/oder Fumarsäureestern an Polyamine entstehen. Solche Polyurea-Systeme sind grundsätzlich bekannt und werden beispielhaft in folgenden Patentanmeldungen beschrieben: EP403921, EP 0573860, US 6605684, EP 1767559, WO 2001007504, WO 2001007399, US 6458293, EP 1426397, DE 102006002153A1 oder der WO 2004033517.

Ferner ist aus dem Stand der Technik die DE102005047562 *bekannt, diese beschreibt Beschichtungssysteme auf Basis von Isocyanatprepolymemeren und Polyasparaginsäureestern. Im Rahmen dieser Veröffentlichung werden spezielle* - *Urethangruppen-freie* - *Isocyanatprepolymere beschrieben, deren Isocyanatgruppen ausschließlich über Allophanatgruppen an Polyetherpolyole angebunden sind. Die Isocyanatprepolymere dieser Veröffentlichung unterscheiden sich damit strukturell von den erfindungsgemäß einsetzbaren Isocyanatprepolymeren. Spezielle Hinweise auf die Verwendung der Systeme zur Grundierung von mineralischen Untergründen finden sich in dieser Veröffentlichung nicht.*

*Die* JP H11349656 A *beschreibt Beschichtungsmaterialien für mineralische Untergründe auf Basis von Polyisocyanatprepolymeren, die mit Polyolen und Polyaminen in Gegenwart von Zinksalzen als Katalysator als 2-Komponentensysteme verarbeitet werden. Im Rahmen dieser Veröffentlichung werden Amine mit primären Aminogruppen verwendet, Asparaginsäureester als mögliche Kombinationspartner für die Isocyanatprepolymere werden nicht benannt.*

Auch wenn in vielen der genannten Veröffentlichungen Beton als mögliches zu beschichtendes Substrat genannt wird, ist es bisher nicht gelungen, derartige Polyurea-Systeme auf Basis von Isocyanaten und Polysparaginsäureestern dahingehend zu optimieren, dass sie als Grundierung mineralischer Untergründe gegebenenfalls unter Asphaltbelägen im Brückenbau unter realistischen Baustellenbedingungen einsetzbar sind.

Aufgabe der vorliegenden Erfindung ist daher die Bereitstellung von Polyurea-Grundierungssystemen für mineralische Untergründe, die unempfindlich gegen Feuchtigkeit sind, bei niedriger Umgebungstemperatur, insbesondere bei Temperaturen unterhalb von 5°C zuverlässig aushärten, dabei aber eine hinreichend lange Verarbeitungszeit haben, um einerseits problemlos von Hand applizierbar zu sein, und um andererseits eine ausreichende Benetzung des Untergrundes sicherzustellen.

Diese Aufgabenstellung konnte durch Einsatz, nachstehend näher charakterisierter 2-Komponentensysteme auf Basis von aminfunktionellen Asparaginsäureestern und speziellen Polyether-basierter Isocyanatprepolymeren gelöst werden.

Der Erfindung liegt die überraschende Beobachtung zugrunde, dass bestimmte nachstehend näher charakterisierte Polyurea-Systeme auf Basis von Isocyanatprepolymeren und Polysparaginsäureestern auch auf feuchten, mineralischen Untergründen blasen- und porenfrei aushärten und eine ausgezeichnete Haftung zum Untergrund besitzen. Insbesondere wurde die Beobachtung gemacht, dass die Haftung der erfindungsgemäßen Polyurea-Systeme auf mineralischen Untergründen durch Feuchtigkeitseinwirkung nicht leidet.

Gegenstand der Erfindung ist die Verwendung von 2-Komponenten Beschichtungssystemen als Grundierung für mineralische Untergründe enthaltend
(i) mindestens ein freie Isocyanatgruppen aufweisendes Pre-polymer mit einem Gehalt an aliphatisch gebundenen NCO-Gruppen von 12,5 bis 17 Gew. -%, vorzugsweise 13 bis 16 Gew. -%, besonders bevorzugt 14 bis 15 Gew.-%, erhältlich durch Umsetzung von aliphatischen Di-oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol, und
(ii) mindestens einen aminofunktionellen Polyasparaginsäureester der allgemeinen Formel 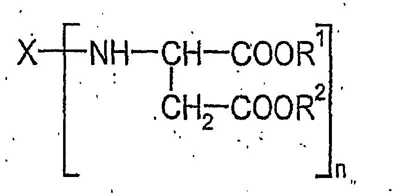
   in der X für einen n-wertigen organischen Rest steht, der durch Entfernung sämtlicher der Aminogruppen aus einem Polyamin, ausgewählt aus der Gruppe 1-Amino-3, 3, 5-trimethyl-5-aminomethyl-cyclohexan, 2, 4- und/oder 2, 6-Hexahydrotoluylendiamin, 2, 4'-und/oder 4, 4'- Diamino-dicyclohexylmethan, 3, 3'-Dimethyl-4, 4'-diaminodicyclohexymethan, 2, 4, 4'-Triamino-5-methyl-dicyclohexylmethan oder Gemischen derselben erhalten wird, wobei
   R1 und R2 unabhängig voneinander für eine Methyl- oder eine Ethylgruppe stehen, vorzugsweise eine Ethylgruppe und n für eine ganze Zahl von mindestens 2 steht.

Die Isocyanatkomponente (i) ist ein Isocyanatgruppen aufweisendes Prepolymer mit einem NCO-Gehalt von 12,5 bis 17 Gew. -%, vorzugsweise 13 bis 16 Gew. -%, besonders bevorzugt 14 bis 15 Gew.-%, das bevorzugt erhältlich ist durch Umsetzung mindestens eines Polyisocyanats mit einem oder mehreren Polyetherpolyolen, die durch Alkoxylierung von hydroxyfunktionellen Starterverbindungen mit Gemischen aus Propylenoxid und Ethylenoxid unter Zuhilfenahme von Katalysatoren wie beispielsweise basischen Katalysatoren wie Alkalihydroxiden oder auch sog. DMC-Katalysatoren, wie sie EP-A 700 949, EP-A 761 708 und WO 97/40086 offenbart werden, erhältlich sind.

Erfindungsgemäß einsetzbare Polyoxyalkylenpolyole besitzen eine mittlere Hydroxyfunktionalität von 1,5 bis 3, bevorzugt 1,8 bis 2,5.

Erfindungsgemäß einsetzbare Polyoxyalkylenpolyole besitzen ein Äquivalentgewicht von mindestens 400 g/Mol, bevorzugt 500 g/Mol bis 4000 g/Mol, besonders bevorzugt 700 g/Mol bis 2000g /Mol.

Das Polyoxyalkylenpolyol kann jeweils gegebenenfalls als Polyethermischung eingesetzt werden.

Als Polyisocyanate zur Herstellung der Isocyanatgruppen aufweisenden Prepolymere (i) kommen aliphatische und cycloaliphatische Polyisocyanate der bekannten Art in Betracht: Beispielhaft genannt seien 4, 4'-Diisocyanatodicyclohexylmethan, 3-Isocyanatomethyl- 3,3, 5-trimethylcyclohexylisocyanat (Isophorondiisocyanat = IPDI), Hexamethylendiisocyanat (HDI), 2- 2,2, 4-Trimethylhexamethylendiisocyanat (THDI) und a, a, a', a'-Tetramethyl-m-xylylen-diisocyanat oder a, a, a', a'- Tetramethyl-p-xylylen-diisocyanat (TMXDI) sowie aus diesen Verbindungen bestehende Gemische.

Zur Herstellung der Isocyanatgruppen aufweisenden Prepolymere können das Polyisocyanat und das Polyoxyalkylenpolyol oder Gemische daraus unter Einhaltung eines NCO/OH Äquivalentverhältnisses von 1,5 : 1 bis 10 : 1 unter Urethanbildung umgesetzt werden. Die Umsetzung findet statt bei Temperaturen von 40 bis 140° C, vorzugsweise 50 bis 110° C. Bei Verwendung eines Überschusses an Polyisocyanat von mehr als 2 : 1 wird überschüssiges freies Polyisocyanat nach der Umsetzung durch in der Technik übliche destillative oder extraktive Verfahren, z. B. durch Dünnschichtdestillation entfernt.

Die so erhältlichen Isocyanatgruppen aufweisenden Prepolymere besitzen einen Gehalt an freien Isocyanatgruppen, der für die erfindungsgemäße Verwendung deutlich zu niedrig ist. Deshalb müssen die so hergestellten Isocyanatgruppen aufweisenden Prepolymere mit vorzugsweise niedrigviskosen Polyisocyanaten, besonders bevorzugt Polyisocyanaten auf Basis von Hexamethylendiisocyanat, abgemischt werden, damit sie den oben gemachten Angaben bezüglich des NCO-Gehaltes entsprechen. Derartige niedrigviskose Polyisocyanate werden beispielsweise mit Hilfe geeigneter Modifizierungsreaktionen, wie z. B. Dimerisierung, Trimerisierung, Biuretisierung, Allophanatisierung und/oder Urethanisierung hergestellt, wobei überschüssiges monomeres Diisocyanat anschließend destillativ aus dem Gemisch entfernt wird, wodurch die Polyisocyanate Restgehalte an monomerem Diisocyanat von <0,5% bez. auf das Gesamtgemisch der Polyisocyanatmischung enthalten. (siehe dazu auch: Laas et al "J. Prakt. Chem, 336, 1 94, 185-200 und Nachrichten aus der Chemie, 55, 380-384, 2007). Die genannten niedrigviskosen Polyisocyanate haben vorzugsweise eine Viskosität von ≤ 4000 mPas.

Allgemein im Rahmen der Erfindung wird die Viskosität bestimmt bei 23°C mit Brookfield-Viskosimeter nach DIN 53019-1, Ausgabe 2008-09.

Polyisocyanate auf Basis von Hexamethylendiisocyanat sind im Rahmen der Erfindung insbesondere solche, welche durch Umsetzung von Hexamethylendiisocyanat mit sich selbst und/oder einer gegenüber Isocyanatgruppen reaktiven Komponente umgesetzt werden oder derart erhältlich sind, und das Polyisocyanat Hexamethylenisocyanat-Endgruppen aufweist. Die Umsetzung des Hexamethylendiisocyanat kann gegebenenfalls in Gegenwart weiterer (Poly)isocyante erfolgen, wobei an den Isocyanat-Edukten Hexamethylendiisocyanat vorzugsweise einen Gewichtsanteil von ≥ 50 Gew.-% oder ≥ 75 Gew.-% ausmacht oder nur Hexamethylendiisocyanat als Isocyanat-Edukt eingesetzt wird.

Bevorzugt einsetzbar sind Isocyanuratgruppen aufweisende Polyisocyanate, wie sie z.B. in der US-PS 3 001 973, in den DE-PS 1 022 789, 1 222 067 und 1 027 394 sowie in den DE-OS 1 929 034 und 2 004 048 beschrieben werden und/oder Allophanatgruppen aufweisende Polyisocyanate, wie sie z.B. in der GB-PS 994 890, in der BE-PS 761 626 und in der NL-OS 7 102 524 beschrieben werden.

Besonders bevorzugt einsetzbar sind Allophanatgruppen und/oder Isocyanuratgruppen aufweisende Polyisocyanate auf Basis von Hexamethylendiisocyanat, die den oben gemachten Angaben bezüglich Restmonomergehalt und Herstellverfahren entsprechen und darüber hinaus durch einen Gehalt an Isocyanatgruppen (NCO-Gehalt) von 17-23% und eine mittlere Isocyanatfunktionalität von 2,5 bis 3,3 gekennzeichnet sind.

Besonders bevorzugt ist die Verwendung von Isocyanatgruppen aufweisenden Prepolymeren, die durch direkte Umsetzung der oben beschriebenen Polyetherpolyole mit den vorstehend beschriebenen Polyisocyanaten auf Basis von Hexamethylendiisocyanat erhalten werden. So können in einem einzigen Reaktionsschritt Isocyanatgruppen aufweisende Prepolymere hergestellt werden, die den vorstehend gemachten Angaben entsprechen und im Sinne der Erfindung besonders bevorzugt einsetzbar sind.

Die Umsetzung kann beschleunigt werden durch Verwendung von Katalysatoren, die die Urethanbildung beschleunigen. Die Mitverwendung derartiger Katalysatoren ist jedoch weniger bevorzugt.

Bevorzugte Härterkomponenten (ii) sind aminofunktionelle Polyasparaginsäureester der allgemeinen Formel 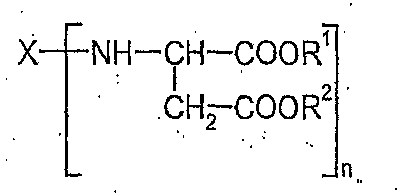 in der X für einen n-wertigen organischen Rest steht, der durch Entfernung sämtlicher der Aminogruppen aus einem Polyamin, ausgewählt aus der Gruppe 1-Amino-3, 3, 5-trimethyl-5-aminomethyl-cyclohexan, 2, 4-und/oder 2, 6-Hexahydrotoluylendiamin, 2, 4'-und/oder 4, 4'-Diamino-dicyclohexylmethan, 3, 3'-Dimethyl-4, 4'-diaminodicyclohexymethan, 2, 4, 4'-Triamino-5-methyl-dicyclohexylmethan oder Gemischen derselben erhalten wird und R1 und R2 unabhängig voneinander für eine Methyl- oder eine Ethylgruppe stehen.

Bevorzugt steht X für einen 2-wertigen Rest der durch Entfernung sämtlicher der Aminogruppen des 1-Amino-3, 3, 5-trimethyl-5-aminomethyl-cyclohexan und/oder des 2, 4'-und/oder 4, 4'- Diamino-dicyclohexylmethans entsteht.

Besonders bevorzugt steht X für einen 2-wertigen Rest der durch Entfernung sämtlicher der Aminogruppen des 2, 4'-und/oder 4, 4'- Diamino-dicyclohexylmethans entsteht.

R1 und R2 stehen jeweils bevorzugt für eine Ethylgruppe. Gegebenenfalls können R1 und R2 jeweils für eine Methylgruppe bestehen.

Die Herstellung der aminofunktionellen Polyasparaginsäureester (ii) kannin an sich bekannter Weise durch Umsetzung der entsprechenden primären Polyamine der Formel [X]+NH₂ mit Malein- oder Fumarsäureestern der allgemeinen Formel R¹ OOCCH=CHCOOR² erfolgen. Geeignete Polyamine sind die oben genannten Diamine. Beispiele geeignete Malein- oder Fumarsäureester sind Maleinsäuredimethylester und bevorzugt Maleinsäurediethylester sowie die entsprechenden Fumarsäureester.

Die Herstellung der aminofünktionellen Polyasparaginsäureester (ii) aus den genannten Ausgangsmaterialien erfolgt bevorzugt innerhalb des Temperaturbereichs von 0 bis 100° C, wobei die Ausgangsmaterialien in solchen Mengenverhältnissen eingesetzt werden, dass auf jede primäre Aminogruppe mindestens eine, vorzugsweise genau eine olefinische Doppelbindung entfällt, wobei im Anschluss an die Umsetzung gegebenenfalls im Überschuss eingesetzte Ausgangsmaterialien destillativ abgetrennt werden können. Die Umsetzung kann in Substanz oder in Gegenwart geeigneter Lösungsmittel wie Methanol, Ethanol, Propanol oder Dioxan oder Gemischen derartiger Lösungsmittel erfolgen, wobei die Mitverwendung von Lösungsmitteln weniger bevorzugt ist.

Zur Herstellung der erfindungsgemäß verwendbaren Grundierungen werden die Komponenten (i) und (ii), unmittelbar vor der Applikation in solchen Mengen vermischt, dass das Äquivalentverhältnis der Isocyanatgruppen der Komponente (i) zu den Aminogruppen der Komponente (ii) 0,5 : 1 bis 1,5 : 1, vorzugsweise 0,9 : 1 bis 1,3 : 1 beträgt.

Die erfindungsgemäß verwendbaren Grundierungen bestehen im Wesentlichen, d.h. mit einem Massenanteil von vorzugsweise mehr als 85%, besonders bevorzugt mehr als 90% aus den Komponenten i) und ii). In untergeordneten Mengen können Hilfs- und Zusatzstoffe der aus der Beschichtungstechnologie bekannten Art mitverwendet werden. Beispielsweise genannt seien in diesem Zusammenhang Füllstoffe, Farbstoffe und Pigmente, Entlüftungsmittel, Entschäumer, Katalysatoren, Alterungsschutzmittel, Verlaufshilfsmittel, Haftvermittler, Weichmacher, Lösemittel sowie reaktive Verdünner. Bevorzugt enthalten die erfindungsgemäß verwendbaren Grundierungen keine Weichmacher und keine Lösemittel. Als reaktive Verdünner können ggf. Asparaginsäureester auf Basis von Polyetheraminen mitverwendet werden, so wie dies in der WO 2014151307 A1 offenbart wird. Es können aber bevorzugt auch Polyetherpolyole der vorstehend charakterisierten Art als reaktive Verdünner mitverwendet werden. Die genannten reaktiven Verdünner können in einem Massenanteil von vorzugsweise weniger als 15%, bevorzugt weniger als 10% mitverwendet werden.

Zur Herstellung der erfindungsgemäß verwendbaren Beschichtungsmittel als Grundierung werden die Einzelkomponenten und gegebenenfalls mitzuverwendende Hilfs- und Zusatzmittel intensiv miteinander vermischt. Die Reaktionsgemische reagieren bereits bei Raumtemperatur zu Polyharnstoffen aus und weisen deswegen nur eine begrenzte Topfzeit auf. Innerhalb dieser Topfzeit werden die Reaktionsgemische verarbeitet. Die erfindungsgemäß verwendbaren Beschichtungsmittel weisen bei 23° C in der Regel eine Topfzeit von 15 bis 30 Minuten auf, wobei Topfzeit definiert ist als der Zeitraum, in dem die Beschichtung homogen, ohne Fäden zu ziehen, applizierbar ist.

Die aus den Einzelkomponenten erhältlichen, erfindungsgemäß verwendbaren Beschichtungsmittel können nach an sich bekannten Methoden, wie beispielsweise durch Spritzen, Streichen, Fluten oder mit Hilfe von Walzen oder Rakeln auf beliebige mineralische Substrate aufgetragen werden. Die Verarbeitungszeit beträgt - abhängig von den umgebenden klimatischen Bedingungen - in der Regel 15 Minuten bis 30 Minuten. Sie härten - abhängig von den umgebenden klimatischen Bedingungen - zumeist innerhalb von 30 bis 90 Minuten zu zähharten Beschichtungen aus, die mechanisch extrem widerstandsfähig sind und eine überragende Haftung zum mineralischen Untergrund zeigen. Überraschenderweise härten die Grundierungen auch auf restfeuchten Untergründen und insbesondere auch auf jungem Beton, d.h. Beton mit einem Alter von 7 Tagen völlig blasen- und porenfrei aus. Dabei scheint also die CO₂-bildende Reaktion der freien Isocyanatgruppen mit der Feuchtigkeit in diesen Beschichtungssystemen überraschenderweise vollständig unterdrückt zu werden, selbst wenn entsprechend den vorstehend gemachten Angaben mit einem signifikanten stöchiometrischen Überschuss an Isocyanatgruppen gearbeitet wird.

Erfindungsgemäß verwendbar sind die beschriebenen Beschichtungsmittel als Poren-verschließende Grundierung auf einem mineralischen Untergrund, insbesondere Beton. Die erfindungsgemäß verwendbaren Beschichtungssysteme sind thermisch sehr beständig und können kurzfristig problemlos bis 250°C erhitzt werden.

Die erfindungsgemäß verwendbaren Beschichtungsmittel weisen eine sehr gute Haftung zu allen bituminösen Materialien und zu Gussasphalt auf, können aber auch in Kombination mit aushärtenden oder abbindenden Flüssigkunststoffen eingesetzt werden. Die aushärtenden oder abbindenden Flüssigkunststoffen sind insbesondere solche, welche durch Aufnahme von Wasser und/oder Sauerstoff aus der Umgebungsatmosphäre abbinden oder aushärten und dann die jeweilige endgültige Beschichtung ergeben. Die erfindungsgemäß verwendbaren Beschichtungsmittel können allgemein im Rahmen der Erfindung auch mehrschichtig appliziert werden, wobei zur Verbesserung der Zwischenschichthaftung für eine nachfolgende Beschichtung Sand in die reagierende Beschichtung eingestreut werden kann. Bevorzugt kann das erfindungsgemäße Beschichtungssystem jeweils ein- oder mehrschichtig unter einer Lage von Gussasphalt oder von bituminösen Materialien, insbesondere Bitumen, oder gegebenenfalls auch von abbindenden oder aushärtenden Flüssigkunststoffen eingesetzt werden, besonders bevorzugt jeweils unter unmittelbarer Anordnung unter der jeweils genannten Lage und haftender Verbindung mit dieser. Die Verwendung als Grundierung auf Beton unter Gussasphalt ist besonders bevorzugt.
Die nachstehenden Beispiele sollen das Wesen der Erfindung näher erläutern, ohne diese aber einzuschränken:

### Beispiel 1:

### Herstellung eines freie Isocyanatgruppen aufweisenden Prepolymeren, Komponente i)

500 g eines difunktionellen auf Propylenglykol gestarteten Polypropylenoxidpolyethers vom mittleren Molekulargewicht 1000 (OH-Zahl = 112) werden mit 888 g Isophorondiisocyanat bei 90 °C zur Reaktion gebracht und bei dieser Temperatur solange gerührt, bis der theoretische NCO-Gehalt von 21,2% erreicht ist. Nach dem Abkühlen wird das Reaktionsgemisch durch Vakuumdünnschichtdestillation bei 145°C / 0,01 bar von monomeren Isophorondiisocyanat befreit. Man erhält ein Isocyanat-Endgruppen-aufweisendes Prepolymer mit einem NCO-Gehalt von 5,7% und einer Viskosität von 11800 mPas (23°C). Dieses Prepolymer wird im Gewichtsverhältnis 1:1 abgemischt mit einem handelsüblichen Allophanatgruppen und Isocyanuratgruppen aufweisenden Polyisocyanat auf Basis von Hexamethylendiisocyanat, mit einem NCO-Gehalt von 22 % und einer Viskosität von 1100 mPas (23°C) (Basonat HA 1000, Handelsprodukt der Firma BASF SE, Ludwigshafen). Dabei erhält man eine erfindungsgemäß verwendbare Polyisocyanatmischung i) mit folgenden Kennzahlen: NCO-Gehalt 13,8 Gew.-%, Viskosität 7900 mPas (23°C)

### Beispiel 2

### Herstellung eines freie Isocyanatgruppen aufweisenden Prepolymeren, Komponente i)

Das Isocyanat-Endgruppen aufweisende Prepolymer aus Beispiel 1 wird im Gewichtsverhältnis 1:2 abgemischt mit einem handelsüblichen Allophanatgruppen und Isocyanuratgruppen aufweisenden Polyisocyanat auf Basis von Hexamethylendiisocyanat, mit einem NCO-Gehalt von 19 % und einer Viskosität von 290 mPas (23°C) (Basonat HA 3000, Handelsprodukt der Firma BASF SE, Ludwigshafen). Dabei erhält man eine erfindungsgemäße Polyisocyanatmischung mit folgenden Kennzahlen: NCO-Gehalt 14,4 Gew.-%, Viskosität 2800 mPas (23°C)

### Beispiel 3

### Herstellung eines freie Isocyanatgruppen aufweisenden Prepolymeren, Komponente i)

2800 g des handelsüblichen Allophanatgruppen und Isocyanuratgruppen aufweisenden Polyisocyanates auf Basis von Hexamethylendiisocyanat, mit einem NCO-Gehalt von 19 % und einer Viskosität von 290 mPas (23°C) aus Beispiel 2 (Basonat HA 3000, Handelsprodukt der Firma BASF SE, Ludwigshafen) werden mit 1000 g eines auf Propylenglykol gestarteten Polypropylenoxidpolyethers vom mittleren Molekulargewicht 2000 bei einer Temperatur von 80°C für 15 Stunden unter Rühren zur Reaktion gebracht. Dabei erhält man eine erfindungsgemäße Polyisocyanatmischung mit einem NCO-Gehalt von 14,4 Gew.-% und einer Viskosität von 2900 mPas (23°C)

### Beispiel 4: Herstellung einer erfindungsgemäßen Grundierung

340 g der Polyisocyanatmischung aus Beispiel 1 werden mit 300 g einer aminischen Härtermischung ii) umgesetzt, bestehend aus 95 Gew% eines Polyasparaginsäureesters auf Basis von Maleinsäurediethylester und 4,4'-Diaminodicyclohexylmethan, ®Desmophen NH 1420, Handelsprodukt der Fa. Bayer Materialscience, Leverkusen, und 5 Gew% des Polypropylenoxidpolyethers aus Beispiel 3. Das Reaktionsgemisch ist so als Grundierung einsetzbar. Die Mischung hat eine Verarbeitungszeit von 17 Minuten bei 23°C. Die Mischung wird vollflächig mittels Streichrolle auf eine trockene Betonplatte der Größe 30 x 30 cm aufgebracht. Beschichtet wurde mit einer Menge von 300 g/m². Nach einer Trockenzeit von 50 Minuten ist die Beschichtung grifftrocken und mechanisch belastbar. Die Oberfläche ist vollständig versiegelt, es sind keinerlei Oberflächenstörungen, Blasen oder Fehlstellen an der Oberfläche erkennbar.

In einem weiteren Versuch wird eine Betonplatte der Größe 30 x 30 cm wie vorstehend beschrieben beschichtet, die Betonplatte wurde aber unmittelbar vor dem Versuch durch Besprühen intensiv befeuchtet. In diesem Fall ist die Beschichtung bereits nach 45 Minuten grifftrocken und mechanisch belastbar. Auf der Oberfläche sind keinerlei Oberflächenstörungen, Blasen oder Fehlstellen an der Oberfläche erkennbar.

In einem weiteren Versuch wird eine Betonplatte der Größe 30 x 30 cm wie vorstehend beschrieben beschichtet, die Betonplatte wurde aber vor dem Versuch durch Einlegen in Wasser über einen Zeitraum von 6 Stunden von der Rückseite durchfeuchtet. Wiederum ist die Beschichtung bereits nach 45 Minuten grifftrocken und mechanisch belastbar. Auf der Oberfläche sind keinerlei Oberflächenstörungen, Blasen oder Fehlstellen an der Oberfläche erkennbar.

### Beispiel 5: Herstellung einer erfindungsgemäßen Grundierung

320 g der Polyisocyanatmischung aus Beispiel 2 werden mit 280 g des Polyasparaginsäureesters auf Basis von Maleinsäurediethylester und 4,4'-Diaminodicyclohexylmethan (®Desmophen NH 1420, Handelsprodukt der Fa. Bayer Materialscience, Leverkusen) als Komponente ii) bei Umgebungstemperatur innig vermischt. Das Reaktionsgemisch ist so als Grundierung einsetzbar. Die Mischung hat eine Verarbeitungszeit von 16 Minuten bei 23°C.

Die Mischung wird vollflächig mittels Streichrolle auf eine trockene Betonplatte der Größe 30 x 30 cm aufgebracht. Beschichtet wurde mit einer Menge von 300 g/m². Nach einer Trockenzeit von 50 Minuten ist die Beschichtung grifftrocken und mechanisch belastbar. Die Oberfläche ist vollständig versiegelt, es sind keinerlei Oberflächenstörungen, Blasen oder Fehlstellen an der Oberfläche erkennbar.

In einem weiteren Versuch wird eine Betonplatte der Größe 30 x 30 cm wie vorstehend beschrieben beschichtet, die Betonplatte wurde aber unmittelbar vor dem Versuch durch Besprühen mit Wasser intensiv befeuchtet. In diesem Fall ist die Beschichtung bereits nach 45 Minuten grifftrocken und mechanisch belastbar. Auf der Oberfläche sind keinerlei Oberflächenstörungen, Blasen oder Fehlstellen an der Oberfläche erkennbar.

In einem weiteren Versuch wird eine Betonplatte der Größe 30 x 30 cm wie vorstehend beschrieben beschichtet, die Betonplatte wurde aber vor dem Versuch durch Einlegen in Wasser über einen Zeitraum von 6 Stunden von der Rückseite durchfeuchtet. Wiederum ist die Beschichtung bereits nach 45 Minuten grifftrocken und mechanisch belastbar. Auf der Oberfläche sind keinerlei Oberflächenstörungen, Blasen oder Fehlstellen an der Oberfläche erkennbar.

### Beispiel 6: Herstellung einer erfindungsgemäßen Grundierung

300 g der Polyisocyanatmischung aus Beispiel 3 werden mit 300 g einer aminischen Härtermischung ii) umgesetzt, bestehend aus 90 Gew% eines Polyasparaginsäureesters auf Basis von Maleinsäurediethylester und 4,4'-Diaminodicyclohexylmethan, ®Desmophen NH 1420, Handelsprodukt der Fa. Bayer Materialscience, Leverkusen- und 19,98 Gew% des Polypropylenoxidpolyethers aus Beispiel 3 und 0,02 Gew% eines phenolischen Antioxidationsmittels (®Irganox 1076, Handelsprodukt der Fa. BASF SE, Ludwigshafen). Das Reaktionsgemisch ist so als Grundierung einsetzbar. Die Mischung hat eine Verarbeitungszeit von 19 Minuten bei 23°C. Das Reaktionsgemisch ist so als Grundierung einsetzbar. Die Mischung hat eine Verarbeitungszeit von 17 Minuten bei 23°C. Die Mischung wird vollflächig mittels Streichrolle auf eine trockene Betonplatte der Größe 30 x 30 cm aufgebracht. Beschichtet wurde mit einer Menge von 300 g/m². Nach einer Trockenzeit von 50 Minuten ist die Beschichtung grifftrocken und mechanisch belastbar. Die Oberfläche ist vollständig versiegelt, es sind keinerlei Oberflächenstörungen, Blasen oder Fehlstellen an der Oberfläche erkennbar.

Zur Bestimmung der thermischen Belastbarkeit der Grundierung wird ein oben offenes, mit 1 kg Quarzsand befülltes und auf 250°C erhitztes zylindrisches Stahlgefäß so auf die Grundierung aufgebracht, dass die beschichtete Oberfläche in direktem Kontakt zum heißen Quarzsand kommt. Nach 1 stündiger Einwirkungsdauer, wobei das Stahlgefäß mit dem Sand abkühlt, wird das Stahlgefäß mit dem Sand entfernt und die Oberfläche wird visuell beurteilt: Es kann keine Beschädigung der Beschichtung durch Verfärbung, Blasenbildung, Risse oder Abplatzungen beobachtet werden, die Beschichtung befindet sich visuell in einem einwandfreien Zustand.

In einem weiteren Versuch wird eine Betonplatte der Größe 30 x 30 cm wie vorstehend beschrieben beschichtet, die Betonplatte wurde aber vor dem Versuch durch Besprühen mit Wasser intensiv befeuchtet. In diesem Fall ist die Beschichtung bereits nach 45 Minuten grifftrocken und mechanisch belastbar. Auf der Oberfläche sind keinerlei Oberflächenstörungen, Blasen oder Fehlstellen an der Oberfläche erkennbar.

In einem weiteren Versuch wird eine Betonplatte der Größe 30 x 30 cm wie vorstehend beschrieben beschichtet, die Betonplatte wurde aber vor dem Versuch durch Einlegen in Wasser über einen Zeitraum von 6 Stunden von der Rückseite durchfeuchtet. Wiederum ist die Beschichtung bereits nach 45 Minuten grifftrocken und mechanisch belastbar. Auf der Oberfläche sind keinerlei Oberflächenstörungen, Blasen oder Fehlstellen erkennbar.

### Beispiel 7: Kombination mit einer aufgeschweißten Polymerbitumen-Schweißbahn:

Auf die grundierten Betonplatten aus den Beispielen 4 bis 6 wurde mit einem Handschweißgerät eine handelsübliche Polymerbitumen-Schweißbahn (Force 4000 AD der Fa. Axter) praxisgerecht aufgeschweißt. Nach dem Erkalten wurde die Haftung der Bitumenbahn durch einen Schälversuch überprüft: die Bitumenbahn haftet gut zum grundierten Untergrund und lässt sich nur unter erheblichem Kraftaufwand vom Untergrund abschälen, wobei nur geringe Reste von Bitumen auf dem grundierten Beton verbleiben. Auf der Oberfläche sind durch das thermische Aufschweißen'keinerlei sichtbare Oberflächenstörungen, Blasen oder Fehlstellen entstanden.

### Beispiel 8: Messung der Haftzugsfestigkeiten

In Anlehnung an die TL-BEL-EP, Stand 13. Februar 2015, wurden Haftzugsmessungen an den beschichteten Betonplatten vorgenommen. Parallel wurde eine handelsübliche 2-Komponenten Epoxidharzgrundierung (BN-Grundierung der Fa. Franken-Systems GmbH, Kitzingen) und eine handelsübliche Grundierung auf Methacrylatharzbasis (Wecryl 124 der Fa. Westwood Kunststofftechnik AG, Zug, Schweiz) zu Vergleichszwecken mit geprüft, wobei die Applikation entsprechend der gültigen Verarbeitungsrichtlinien der Hersteller ausgeführt wurde. Alle Beschichtungen wurden nach der Applikation 48 h bei Umgebungstemperatur gelagert, um eine vollständige Aushärtung sicherzustellen. Die Abzugsstempel wurden mittels eines handelsüblichen 2-Komponenten-Epoxidharz-Klebers verklebt, wobei die Oberfläche der Grundierung zu Erzielung eines besseren Haftverbundes aufgeraut wurde. Es wird jeweils der Mittelwert aus 3 Messungen angegeben.

| **Grundierungs-System** | **Trockener Beton** | **Rückseitig durchfeuchteter Beton** | **Beton nach thermischer Belastung durch Aufschweißen** |
|---|---|---|---|
| Erfindungsgemäße Grundierung, Beispiel 6 | 4,1 N/mm² (Bruch 2mal zwischen Beton und Grundierung, 1mal zwischen Kleber und Grundierung) | 4,0 N/mm² (3 mal Bruch zwischen Beton und Grundierung) | 3,8 N/mm² (Bruch 3 mal zwischen Beton und Grundierung) |
| 2K-Epoxidharz Grundierung | 3,5 N/mm² (Bruch 2mal zwischen Beton und Grundierung, 1mal zwischen Kleber und Grundierung) | 1,6 N/mm² (3 mal Ablösung der Grundierung vom Beton) | 3,6 N/mm² (Bruch 3 mal zwischen Beton und Grundierung) |
| Methacrylatharz Grundierung | 4,0 N/mm² (3 mal Bruch zwischen Beton und Grundierung) | 1,9 N/mm² (3 mal Ablösung der Grundierung vom Beton), die Oberfläche der Grundierung ist inhomogen und weisslich verfärbt | 4,1 N/mm² (3 mal Bruch zwischen Beton und Grundierung) |

### Beispiel 9: Härtung bei tiefen Temperaturen

Zur Bestimmung der Härtung bei tiefen Temperaturen wurde die oben beschriebene handelsübliche Epoxidharz-Grundierung und die erfindungsgemäße Grundierung aus Beispiel 6 auf eine Betonplatte wie oben beschrieben aufgebracht, wobei die Betonplatte aber vor dem Versuch und auch während der Aushärtung in einem handelsüblichen Kühlschrank auf +3°C abgekühlt wurde.

Die Epoxidharzgrundierung ist nach einer Härtungsdauer von 48 Stunden bei 3°C noch nicht ausgehärtet, die Oberfläche ist klebrig und weiß verfärbt.

Die erfindungsgemäße Grundierung aus Beispiel 6 ist nach einer Härtungsdauer von 4 Stunden bei 3°C vollständig ausgehärtet, die Oberfläche ist visuell einwandfrei, ohne Verfärbungen, Fehlstellen, Poren oder Blasen.

## Patentansprüche

1. Verwendung von 2-Komponenten Beschichtungssystemen enthaltend
i) mindestens ein freie Isocyanatgruppen aufweisendes Prepolymer, erhältlich durch Umsetzung von aliphatischen Di- oder Polyisocyanaten mit mindestens einem durch Alkoxylierung hydroxyfunktioneller Startermoleküle erhältlichen Polyoxyalkylenpolyol mit einer mittleren Hydroxyfunktionalität von 1,5 bis 3 und einem Äquivalentgewicht von mindestens 400 g/Mol, und
ii) mindestens einen aminofunktionellen Polyasparaginsäureester der allgemeinen Formel 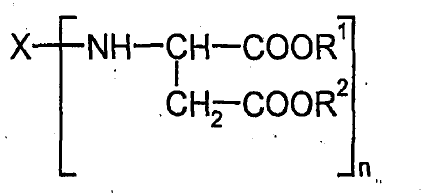
in der X für einen n-wertigen organischen Rest steht, der durch Entfernung sämtlicher Aminogruppen aus einem Polyamin, ausgewählt aus der Gruppe 1-Amino-3, 3, 5-trimethyl-5-aminomethyl-cyclohexan, 2, 4- - Hexahydrotoluylendiamin, 2, 6-Hexahydrotoluylendiamin, 2, 4'- Diamino-dicyclohexylmethan, 4, 4'- Diamino-dicyclohexylmethan, 3, 3'-Dimethyl-4, 4'-diaminodicyclohexymethan, 2, 4, 4'-Triamino-5-methyl-dicyclohexylmethan oder Gemische derselben erhalten wird,
R1 und R2 unabhängig voneinander für eine Methyl- oder eine Ethylgruppe stehen und n für eine ganze Zahl von mindestens 2 steht, **dadurch gekennzeichnet, dass** das mindestens eine freie Isocyanatgruppen aufweisende Prepolymer mit einem Gehalt an aliphatisch gebundenen NCO-Gruppen von 12,5 bis 17 Gew. -% ist, und wobei die Verwendung die Grundierung für mineralische Untergründe ist.

2. Verwendung von 2-Komponenten Beschichtungssystemen gemäß Anspruch 1, **dadurch gekennzeichnet, dass** mindestens ein freie Isocyanatgruppen aufweisendes Prepolymer i) mit einem Gehalt an aliphatisch gebundenen NCO-Gruppen von 13 bis 16 Gew. -%, enthalten ist.

3. Verwendung von 2-Komponenten Beschichtungssystemen gemäß Anspruch 2, **dadurch gekennzeichnet, dass** mindestens ein freie Isocyanatgruppen aufweisendes Prepolymer i) mit einem Gehalt an aliphatisch gebundenen NCO-Gruppen von 14 bis 15 Gew. -%, enthalten ist.

4. Verwendung von 2-Komponenten Beschichtungssystemen gemäß einem der Ansprüche 1-3, **dadurch gekennzeichnet, dass** das Polyoxyalkylenpolyol eine mittlere Hydroxyfunktionalität von 1,8 bis 2,5 aufweist.

5. Verwendung von 2-Komponenten Beschichtungssystemen gemäß einem der Ansprüche 1-4, **dadurch gekennzeichnet, dass** das Polyoxyalkylenpolyol ein Äquivalentgewicht von bis zu 4000 g/Mol aufweist.

6. Verwendung von 2-Komponenten Beschichtungssystemen gemäß einem der Ansprüche 1-5, **dadurch gekennzeichnet, dass** mindestens ein freie Isocyanatgruppen aufweisendes Prepolymer i) mit einem Gehalt an aliphatisch gebundenen NCO-Gruppen von 12,5 bis 17 Gew. -%, enthalten ist, welches durch Umsetzung eines Polyisocyanates auf Basis von Hexamethylendiisocyanat mit einem oder mehreren durch Alkoxylierung hydroxyfunktioneller Startermoleküle erhältlichen Polyoxyalkylenpolyolen mit einer mittleren Hydroxyfunktionalität von 1,5 bis 3 und einem Äquivalentgewicht von mindestens 400 g/Mol, erhältlich ist.

7. Verwendung von 2-Komponenten Beschichtungssystemen gemäß einem der Ansprüche 1-5, **dadurch gekennzeichnet, dass** mindestens ein freie Isocyanatgruppen aufweisendes Prepolymer i) mit einem Gehalt an aliphatisch gebundenen NCO-Gruppen von 12,5 bis 17 Gew. -%, enthalten ist, welches durch Umsetzung eines Polyisocyanates auf Basis von Hexamethylendiisocyanat mit mit einem oder mehreren durch Alkoxylierung hydroxyfunktioneller Startermoleküle erhältlichen Polyoxyalkylenpolyolen mit einer mittleren Hydroxyfunktionalität von 1,8 bis 2,2 und einem Äquivalentgewicht von 700 bis 2000 g/Mol, erhältlich ist.

8. Verwendung von 2-Komponenten Beschichtungssystemen gemäß einem der Ansprüche 1-5, **dadurch gekennzeichnet, dass** mindestens ein freie Isocyanatgruppen aufweisendes Prepolymer i) mit einem Gehalt an aliphatisch gebundenen NCO-Gruppen von 12,5 bis 17 Gew. -%, enthalten ist, welches durch Umsetzung eines Polyisocyanates auf Basis von Hexamethylendiisocyanat enthaltend Allophanat und/oder Isocyanuratgruppen mit einem oder mehreren durch Alkoxylierung hydroxyfunktioneller Startermoleküle erhältlichen Polyoxyalkylenpolyolen mit einer mittleren Hydroxyfunktionalität von 1,8 bis 2,2 und einem Äquivalentgewicht von 700 bis 2000 g/Mol, erhältlich ist.

9. Verwendung von 2-Komponenten Beschichtungssystemen gemäß einem der Ansprüche 1-8, **dadurch gekennzeichnet, dass** Polyasparaginsäureester ii) eingesetzt werden, worin R1 und R2 jeweils für eine Ethylgruppe stehen und X für einen 2 wertigen Rest, wie er durch Entfernung der Aminogruppen des 4,4'-Diaminodicyclohexylmethans entsteht.

10. Verwendung von 2-Komponenten Beschichtungssystemen gemäß einem der Ansprüche 1-9, **dadurch gekennzeichnet, dass** die Komponenten (i) und (ii) in einem Mengenverhältnis vorliegen, so dass das Äquivalentverhältnis der Isocyanatgruppen der Komponente (i) zu den Aminogruppen der Komponente (ii) 0,5 : 1 bis 1,5 : 1 beträgt.

11. Verwendung von 2-Komponenten Beschichtungssystemen gemäß Anspruch 10, **dadurch gekennzeichnet, dass** die Komponenten (i) und (ii) in einem Mengenverhältnis vorliegen, so dass das Äquivalentverhältnis der Isocyanatgruppen der Komponente (i) zu den Aminogruppen der Komponente (ii) 0,9 : 1 bis 1,3 : 1 beträgt.

12. Verwendung von 2-Komponenten Beschichtungssystemen gemäß einem der Ansprüche 1-11, **dadurch gekennzeichnet, dass** die Komponenten (i) und (ii) in einem Gesamtanteil von ≥ 85 Gew.-% in der Zusammensetzung enthalten sind.

13. Verwendung von 2 Komponenten-Beschichtungssystemen gemäß einem oder mehreren der Ansprüche 1-12 als ein- oder mehrschichtige Grundierung unter Gussasphalt oder bituminösen Materialien oder unter aushärtenden oder abbindenden Flüssigkunststoffen.

14. Mineralischer Untergrund mit einem als Grundierung verwendeten 2-Komponenten Beschichtungssystemen nach einem der Ansprüche 1-13.

## Claims

1. Use of 2-component coating systems, comprising:
i) at least one prepolymer containing free isocyanate groups, obtainable by reaction of aliphatic di- or polyisocyanates with at least one polyoxyalkylene polyol obtainable by alkoxylation of hydroxy-functional starter molecules with a an average hydroxy functionality of 1.5 to 3 and an equivalent weight of at least 400 g/mol, and
ii) at least one amino-functional polyaspartic acid ester of the general formula 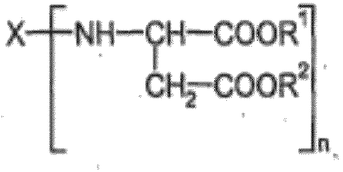
where X represents an n-valent organic radical which is obtained by removal of all amino groups from a polyamine, selected from the group consisting of 1-amino-3,3,5-trimethyl-5-aminomethyl-cyclohexane, 2,4-hexahydrotoluylenediamine, 2,6-hexahydrotoluylenediamine, 2,4'-diamino-dicyclohexylmethane, 4,4'-diamino-dicyclohexylmethane, 3,3'-dimethyl-4,4'-diamino-dicyclohexymethane, 2,4,4'-triamino-5-methyl-dicyclohexylmethane or mixtures thereof,
R1 and R2 independently of one another represent a methyl or an ethyl group and n represents an integer of at least 2, **characterized in that** the at least one prepolymer containing free isocyanate groups has a content of aliphatically-bound NCO groups of 12.5 to 17% by weight, and wherein it is used as a primer for mineral substrates.

2. Use of 2-component coating systems according to claim 1, **characterized in that** at least one prepolymer i) containing free isocyanate groups is present with a content of aliphatically-bound NCO groups of 13 to 16% by weight.

3. Use of 2-component coating systems according to claim 2, **characterized in that** at least one prepolymer i) containing free isocyanate groups is present with a content of aliphatically-bound NCO groups of 14 to 15% by weight.

4. Use of 2-component coating systems according to one of claims 1-3, **characterized in that** the polyoxyalkylene polyol has an average hydroxy functionality of 1.8 to 2.5.

5. Use of 2-component coating systems according to one of claims 1-4, **characterized in that** the polyoxyalkylene polyol has an equivalent weight of up to 4000 g/mol.

6. Use of 2-component coating systems according to one of claims 1-5, **characterized in that** at least one prepolymer i) containing free isocyanate groups is present with a content of aliphatically-bound NCO groups of 12.5 to 17 weight %, which is obtainable by reaction of a polyisocyanate based on hexamethylene diisocyanate with one or more polyoxyalkylene polyol(s) obtainable by alkoxylation of hydroxy-functional starter molecules with a mean hydroxy functionality of 1.5 to 3 and an equivalent weight of at least 400 g/mol.

7. Use of 2-component coating systems according to one of claims 1-5, **characterized in that** at least one prepolymer i) containing free isocyanate groups is present with a content of aliphatically-bound NCO groups of 12.5 to 17% by weight, which is obtainable by reaction of a polyisocyanate based on hexamethylene diisocyanate with one or more polyoxyalkylene polyol(s) obtainable by alkoxylation of hydroxy-functional starter molecules with an average hydroxy functionality of 1.8 to 2.2 and an equivalent weight of 700 to 2000 g/mol.

8. Use of 2-component coating systems according to one of claims 1-5, **characterized in that** at least one prepolymer i) containing free isocyanate groups i) is present with a content of aliphatically-bound NCO groups of 12.5 to 17 % by weight, which is obtainable by reaction of a polyisocyanate based on hexamethylene diisocyanate containing allophanate and/or isocyanurate groups with one or more polyoxyalkylene polyol(s) obtainable by alkoxylation of hydroxy-functional starter molecules with an average hydroxy functionality of 1.8 to 2.2 and an equivalent weight of 700 to 2000 g/mol.

9. Use of 2-component coating systems according to any one of claims 1-8, **characterized in that** polyaspartic acid esters ii) are used, wherein R1 and R2 each represent an ethyl group and X represents a 2-valent radical as formed by removal of the amino groups of 4,4-diaminodicyclohexylmethane.

10. Use of 2-component coating systems according to any one of claims 1-9, **characterized in that** the components (i) and (ii) are present in a quantity ratio such that the equivalent ratio of the isocyanate groups of component (i) to the amino groups of component (ii) is 0.5 : 1 to 1.5 : 1.

11. Use of 2-component coating systems according to claim 10, **characterized in that** the components (i) and (ii) are present in a quantity ratio such that the equivalent ratio of the isocyanate groups of component (i) to the amino groups of component (ii) is 0.9 : 1 to 1.3 : 1.

12. Use of 2-component coating systems according to any one of claims 1-11, **characterized in that** the components (i) and (ii) are present in the composition in a total proportion of ≥ 85% by weight.

13. Use of 2 component coating systems according to one or more of claims 1-12 as a single- or multilayer primer under mastic asphalt or bituminous materials or under hardening or setting liquid plastic materials.

14. Mineral substrate with a 2-component coating system used as a primer according to any one of claims 1-13.

## Revendications

1. Utilisation de systèmes de revêtement à 2 composants, comprenant :
i) au moins un prépolymère contenant des groupes isocyanate libres, pouvant être obtenu par réaction de di- ou polyisocyanates aliphatiques avec au moins un polyoxyalkylène polyol pouvant être obtenu par alcoxylation de molécules de départ à fonction hydroxy avec une fonctionnalité hydroxy moyenne de 1,5 à 3 et un poids équivalent d'au moins 400 g/mole, et
ii) au moins un ester d'acide polyaspartique à fonction amino de formule générale 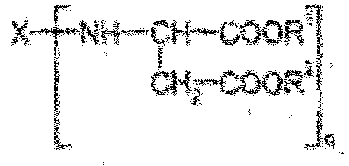
où X représente un radical organique n-valent qui est obtenu par élimination de tous les groupes amino d'une polyamine, choisie dans le groupe constitué par le 1-amino-3,3,5-triméthyl-5-aminométhyl-cyclohexane, le 2,4-hexahydrotoluylènediamine, le 2,6-hexahydrotoluylènediamine, le 2,4'-diamino-dicyclohexylméthane, le 4,4'-diamino-dicyclohexylméthane, le 3,3'-diméthyl-4,4'-diamino-dicyclohexyméthane, le 2,4,4'-triamino-5-méthyl-dicyclohexylméthane ou des mélanges de ceux-ci,
R1 et R2 représentent indépendamment l'un de l'autre un groupe méthyle ou éthyle et n représente un nombre entier d'au moins 2, **caractérisé en ce que** le au moins un prépolymère contenant des groupes isocyanate libres présente une teneur en groupes NCO liés aliphatiquement de 12,5 à 17 % en poids, et **en ce qu'**il est utilisé comme amorce pour des substrats minéraux.

2. Utilisation de systèmes de revêtement à 2 composants selon la revendication 1, **caractérisée en ce qu'**au moins un prépolymère i) contenant des groupes isocyanate libres est présent avec une teneur en groupes NCO liés aliphatiquement de 13 à 16 % en poids.

3. Utilisation de systèmes de revêtement à 2 composants selon la revendication 2, **caractérisée en ce qu'**au moins un prépolymère i) contenant des groupes isocyanate libres est présent avec une teneur en groupes NCO liés aliphatiquement de 14 à 15 % en poids.

4. Utilisation de systèmes de revêtement à 2 composants selon l'une des revendications 1 à 3, **caractérisée en ce que** le polyoxyalkylène polyol présente une fonctionnalité hydroxy moyenne de 1,8 à 2,5.

5. Utilisation de systèmes de revêtement à 2 composants selon l'une des revendications 1 à 4, **caractérisée en ce que** le polyoxyalkylène polyol a un poids équivalent allant jusqu'à 4000 g/mole.

6. Utilisation de systèmes de revêtement à deux composants selon l'une des revendications 1 à 5, **caractérisée en ce qu'**au moins un prépolymère i) contenant des groupes isocyanate libres est présent avec une teneur en groupes NCO liés aliphatiquement de 12,5 à 17 % en poids, qui peut être obtenu par réaction d'un polyisocyanate à base d'hexaméthylène diisocyanate avec un ou plusieurs polyoxyalkylène polyol(s) pouvant être obtenu(s) par alcoxylation de molécules de départ à fonction hydroxy avec une fonctionnalité hydroxy moyenne de 1,5 à 3 et un poids équivalent d'au moins 400 g/mole.

7. Utilisation de systèmes de revêtement à 2 composants selon l'une des revendications 1 à 5, **caractérisée en ce qu'**au moins un prépolymère i) contenant des groupes isocyanate libres et présent avec une teneur en groupes NCO liés aliphatiquement de 12,5 à 17 % en poids, qui peut être obtenu par réaction d'un polyisocyanate à base d'hexaméthylène diisocyanate avec un ou plusieurs polyoxyalkylène polyol(s) pouvant être obtenu(s) par alcoxylation de molécules de départ à fonction hydroxy avec une fonctionnalité hydroxy moyenne de 1,8 à 2,2 et un poids équivalent de 700 à 2000 g/mole.

8. Utilisation de systèmes de revêtement à 2 composants selon l'une des revendications 1 à 5, **caractérisée en ce qu'**au moins un prépolymère i) contenant des groupes isocyanate libres i) est présent avec une teneur en groupes NCO liés aliphatiquement de 12. 5 à 17 % en poids, qui peut être obtenu par réaction d'un polyisocyanate à base d'hexaméthylène diisocyanate contenant des groupes allophanate et/ou isocyanurate avec un ou plusieurs polyoxyalkylène polyol(s) pouvant être obtenu(s) par alcoxylation de molécules de départ à fonction hydroxy avec une fonctionnalité hydroxy moyenne de 1,8 à 2,2 et un poids équivalent de 700 à 2000 g/mole.

9. Utilisation de systèmes de revêtement à 2 composants selon l'une quelconque des revendications 1-8, **caractérisée en ce que** l'on utilise des esters d'acide polyaspartique ii), dans lesquels R1 et R2 représentent chacun un groupe éthyle et X représente un radical 2-valent tel que formé par l'élimination des groupes amino du 4,4-diaminodicyclohexylméthane.

10. Utilisation de systèmes de revêtement à 2 composants selon l'une quelconque des revendications 1 à 9, **caractérisée en ce que** les composants (i) et (ii) sont présents dans un rapport quantitatif tel que le rapport équivalent des groupes isocyanate du composant (i) aux groupes amino du composant (ii) est de 0,5 : 1 à 1,5 : 1.

11. Utilisation de systèmes de revêtement à 2 composants selon la revendication 10, **caractérisée en ce que** les composants (i) et (ii) sont présents dans un rapport quantitatif tel que le rapport équivalent des groupes isocyanate du composant (i) aux groupes amino du composant (ii) est de 0,9 : 1 à 1,3 : 1.

12. Utilisation de systèmes de revêtement à 2 composants selon l'une quelconque des revendications 1 à 11, **caractérisée en ce que** les composants (i) et (ii) sont présents dans la composition dans une proportion totale de ≥ 85% en poids.

13. Utilisation de systèmes de revêtement à deux composants selon une ou plusieurs des revendications 1 à 12 comme amorce monocouche ou multicouche sous l'asphalte coulé ou les matériaux bitumineux ou sous des matières plastiques liquides de prise et durcissement.

14. Substrat minéral avec un système de revêtement à 2 composants utilisé comme amorce selon l'une des revendications 1-13.
